# EUROPEAN PATENT APPLICATION

(11) **EP 3 431 847 A1**
(43) Date of publication of application: **23.01.2019**
(21) Application number: 17181685.3
(22) Date of filing: 17.07.2017
(51) Int. Cl.: F16K 31/06, F16K 27/04

(54) **REGULATION SYSTEM AND METHOD FOR AN ELECTROVALVE**

(71) Applicant: Microtecnica S.r.l., 10126 Turin (IT)
(72) Inventor: GIANFRANCESCHI, Marco, 10142 Torino (TO) (IT)
(74) Representative: Dehns

(57) **Abstract**

A system for regulating an electrovalve, the system comprising: an electrovalve assembly (10) having a housing (20) to house a shaft (12) and a plunger (15) connected to the shaft (12); a spring (14) provided within the housing (20), wherein a first end (14a) of the spring (14) is coupled to one end of the plunger (15) and wherein the spring (14) further includes a second end (14b); a bore (21) located in the housing (20), wherein the bore (21) is configured to expose the second end (14b) of the spring (14); an external instrument (18) configured to be received in the bore (21) such that the external instrument (18) abuts the second end (14b) of the spring (14) so that the load on the spring (14) can be adjusted.

## Description

### BACKGROUND

Electrovalves, or solenoid valves, may be used in micro-gravity environments. In such environments, the electrovalves are also used with high pressure fluids. Electrovalves provide on/off and proportional flow controls in fluid systems.

Electrovalves can be assembled prior to use. In some configurations, these electrovalves are supplied with high pressure fluids. In an example, and for micro-gravity use, these electrovalves can be supplied with Helium up to pressures of 85 bar. After assembly of the electrovalve, the valve is tested for leakage. At present, if a leak is determined, the electrovalve must be disassembled, re-worked and then re-assembled for a new test.

### SUMMARY OF THE INVENTION

According to the present disclosure, there is provided a system for regulating an electrovalve, the system comprising an electrovalve assembly having a housing to house a shaft and a plunger connected to the shaft; a spring provided within the housing, wherein a first end of the spring is coupled to one end of the plunger and wherein the spring further includes a second end; a bore located in the housing, wherein the bore is configured to expose the second end of the spring; an external instrument configured to be received in the bore such that the external instrument abuts the second end of the spring so that the load on the spring can be adjusted.

Preferably, the bore may extend in a longitudinal direction to the spring.

Further, the bore may have an opening to expose the second end of the spring.

Preferably the bore may have an outer wall and an inner wall, wherein the inner wall has a smaller radius than the outer wall.

Further, the outer wall may have an opening to receive the external instrument.

The external instrument may have a first end and a second end, wherein the first end is configured to be received by the inner wall and the second end is configured to be received by the outer wall.

Preferably, the external instrument may have a threaded portion, and preferably the bore includes a helical insert to receive the threaded portion of the external instrument.

The external instrument may be a screw.

Further, a disc may be provided between the second end of the spring and the bore.

According to the present disclosure, there is also provided a method for regulating an electrovalve, the method comprising: providing an electrovalve assembly having a housing to house a shaft and a plunger connected to the shaft; providing a spring within the housing, wherein a first end of the spring is coupled to one end of the plunger and wherein the spring further includes a second end; providing a bore in the housing, wherein the bore is configured to expose the second end of the spring; abutting an external instrument to the second end of the spring, through the bore, so that the load on the spring can be adjusted.

Preferably, the bore may include an inner wall and an outer wall, and wherein the external instrument has a first end and a second end, wherein the first end is configured to be received by the inner wall and the second end is configured to be received by the outer wall.

The external instrument may have a threaded portion, and wherein the bore includes a helical insert to receive the threaded portion of the external instrument.

Preferably, the external instrument may be a screw.

### BRIEF DESCRIPTION OF THE DRAWINGS

Figure 1 is a schematic view of a system for regulating an electrovalve.
Figure 2 is a schematic view of the portion A of Figure 1,

### DETAILED DESCRIPTION OF THE INVENTION

The present disclosure relates to an electrovalve system and method that can regulate forces within an electrovalve.

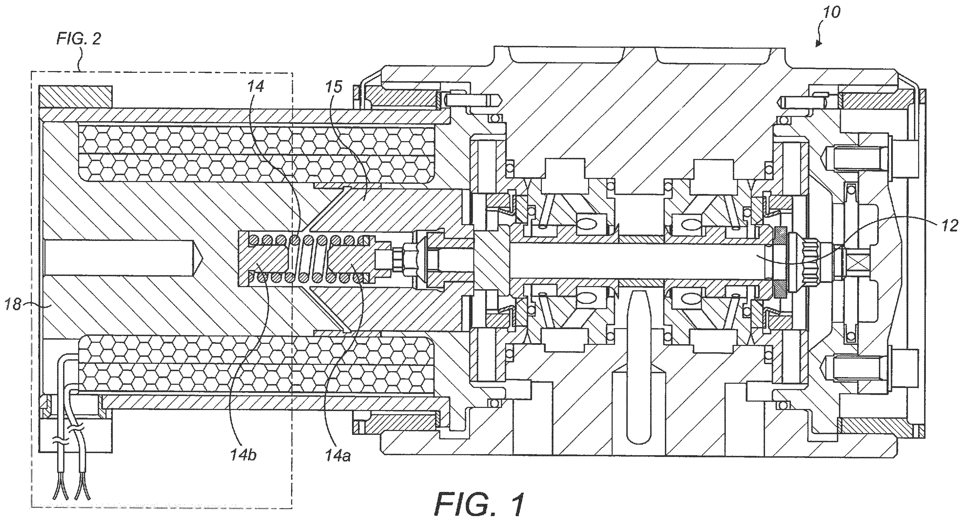

As shown in Figure 1, there is provided an electrovalve assembly 10. In the example shown, the electrovalve is a four-way electrovalve. For example, an inlet (not shown) provides a fluid at a pressure to an outlet (not shown) and an unpressurised outlet (not shown) is connected to a vent (not shown).

As is known in the art, an electrovalve assembly 10 includes a shaft 12 that allows the electrovalve to move from an "off' to an "on" position or vice versa. The electrovalve of the present disclosure may be used in conjunction with a micro-gravity environment where high pressure fluid is present. For example, the fluid used in these environments may be Helium at pressures of up to 85 bar. In both operating conditions of the electrovalve (e.g. "on" or "off"), the shaft 12 does not have a fixed position imposed by mechanical constraints, but the position of the shaft 12 is defined by the equilibrium of the forces acting on the shaft 12. The position of the shaft 12 has a direct influence on the leakage of the electrovalve. The present invention allows for a possibility to change one of the loads concurring to the equilibrium (e.g. the spring preload) to help to perform fine leakage setting during acceptance/production test phases.

In common practice in the art, the electrovalve assembly 10 includes a spring 14. In the example shown in Figure 1, the spring 14 has a first end 14a and a second end 14b. The first end 14a is coupled to the shaft 12. Surrounding the spring 14 is a coil 16 that is activated to move a plunger 15 that is connected to the shaft 12 to turn the electrovalve assembly 10 from an "off' position to an "on" position and vice versa. In examples known in the art, the coil 16 may be any standard or specially designed solenoid winding. Typically, the coil 16 is made of copper windings, but the coil 16 could be any electrically conductive material. The spring 14, coil 16, plunger 15 and shaft 12 of Figure 1 extend in a longitudinal axis of the electrovalve assembly 10.

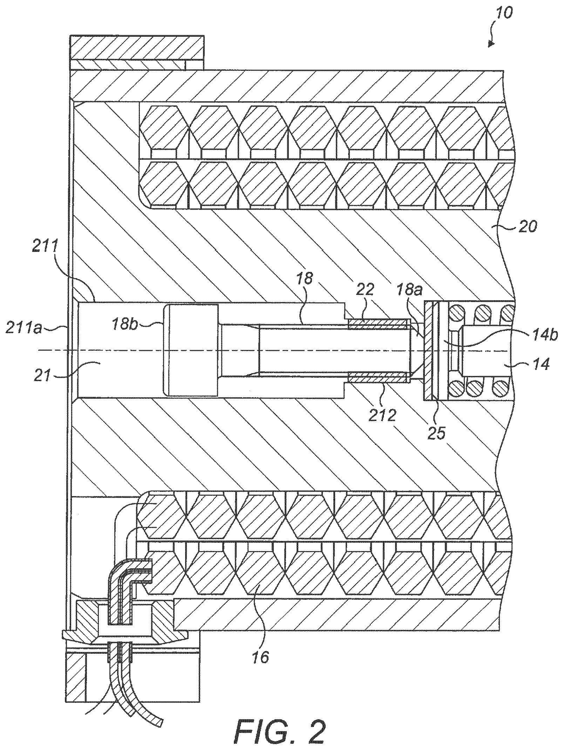

A portion "A" is outlined in Figure 1. In the example shown, the second end 14b of the spring 14 is exposed to receive an external abutment means 18. This will be described in more detail in conjunction with Figure 2.

Figure 2 shows an expanded view of the portion "A" of Figure 1. As can be seen in this Figure, the internal components of the electrovalve assembly 10 (as shown in Figure 1) are provided, such as the coil 16 and spring 14. For example, the electrovalve assembly 10 may include housing 20 that houses the internal components within the electrovalve assembly 10.

As can be seen in Figure 2, there may be provided a bore 21 which extends through the housing 20 in the longitudinal direction towards the spring 14. An opening is provided between the bore 21 and the spring 14 to expose the second end 14b of the spring 14. The bore 21 may include an outer wall 211 and an inner wall 212, wherein the inner wall 212 has a smaller radius than the outer wall 211. In examples, the outer wall 211 has a diameter of approximately 9mm and the inner wall 212 has a diameter of approximately 5mm. The outer wall 211 of the bore 21 has an opening 211 a to receive an external instrument 18, which may be introduced through the bore 21. The inner wall 212 also receives the external instrument 18 so that the external instrument 18 can be introduced to close proximity of the spring 14 of the electrovalve assembly 10.

The external instrument 18 may include a body extending from a first end 18a to a second end 18b. The first end 18a, as well as the body, may have a radius to fit snug within the inner wall 212. The second end 18b may have a radius that fits snug with the outer wall 211. As the external instrument 18 is introduced into the bore 21, the outer wall 211 and the inner wall 212, it may push through the opening to abut the second end 14a of the spring 14. When the external instrument is pushed further through the opening, the abutment means, or external instrument 18, can increase the load on the spring 14. Alternatively, if the increase of the load is too great, the abutment means, or external instrument 18, can be extracted back through the bore 21 to decrease the load on the spring 14.

In one example, the external instrument 18 may include a threaded portion on the body and first end 18a. A helical insert 22 may be provided on the inner wall 212 to receive the threaded portion of the body and first end 18a. For example, like a screw. Therefore, as the external instrument 18 is rotated into the helical insert 22, the first end 18a mates with the helical insert 22 and rotates to abut the second end 14b of the spring 14 to increase or decrease the load of the spring 14 in the same manner as discussed above.

In a further example, there may also be provided a disc 25 located between the second end 14b of the spring 14 and the opening of the inner wall 212 that exposes the spring 14. The disc 25 may be an anti-friction disc and this disc acts as a prevention for the spring 14 to rotate as the external instrument 18 abuts and moves the spring 14 to increase and decrease the load.

In one example, there is also provided a method for regulating an electrovalve, such as the electrovalves discussed above. The method includes providing an electrovalve assembly 10 having a shaft 12 and a spring 14. An external instrument 18 is provided to abut the spring 14 to increase or decrease the load on the spring 14, as described in conjunction with Figure 2 above.

Although the invention has been described in terms of preferred examples as set forth above, it should be understood that these examples are illustrative only and that the claims are not limited to those examples. Those skilled in the art will be able to make modifications and alternatives in view of the disclosure which are contemplated as falling within the scope of the appended claims.

## Claims

1. A system for regulating an electrovalve, the system comprising:
an electrovalve assembly (10) having a housing (20) to house a shaft (12) and a plunger (15) connected to the shaft (12);
a spring (14) provided within the housing (20), wherein a first end (14a) of the spring (14) is coupled to one end of the plunger (15) and wherein the spring (14) further includes a second end (14b);
a bore (21) located in the housing (20), wherein the bore (21) is configured to expose the second end (14b) of the spring (14);
an external instrument (18) configured to be received in the bore (21) such that the external instrument (18) abuts the second end (14b) of the spring (14) so that the load on the spring (14) can be adjusted.

2. The system of claim 1, wherein the bore (21) extends in a longitudinal direction to the spring (14).

3. The system of claims 1 or 2, wherein the bore (21) has an opening to expose the second end (14b) of the spring (14).

4. The system of any preceding claim, wherein the bore (21) has an outer wall (211) and an inner wall (212)

5. The system of claim 4, wherein the inner wall (212) has a smaller radius than the outer wall (211).

6. The system of claims 4 or 5, wherein the outer wall (211) has an opening (211a) to receive the external instrument (18).

7. The system of any of claims 5 or 6, wherein the external instrument (18) has a first end (18a) and a second end (18b), wherein the first end (18a) is configured to be received by the inner wall (212) and the second end (18b) is configured to be received by the outer wall (211).

8. The system of any preceding claim, wherein the external instrument (18) has a threaded portion, and wherein the bore (21) includes a helical insert (22) to receive the threaded portion of the external instrument (18).

9. The system of any preceding claim, wherein the external instrument (18) is a screw.

10. The system of any preceding claim, wherein a disc (25) is provided between the second end (14b) of the spring (14) and the bore (21).

11. A method for regulating an electrovalve, the method comprising:
providing an electrovalve assembly (10) having a housing (20) to house a shaft (12) and a plunger (15) connected to the shaft (12);
providing a spring (14) within the housing (20), wherein a first end (14a) of the spring (14) is coupled to one end of the plunger (15) and wherein the spring (14) further includes a second end (14b);
providing a bore (21) in the housing (20), wherein the bore (21) is configured to expose the second end (14b) of the spring (14);
abutting an external instrument (18) to the second end (14b) of the spring (14), through the bore (21), so that the load on the spring (14) can be adjusted.

12. The method of claim 11, wherein the bore (21) includes an inner wall (212) and an outer wall (211), and wherein the external instrument (18) has a first end (18a) and a second end (18b), wherein the first end (18a) is configured to be received by the inner wall (212) and the second end (18b) is configured to be received by the outer wall (211).

13. The method of any of claims 11 or 12, wherein the external instrument (18) has a threaded portion, and wherein the bore (21) includes a helical insert (22) to receive the threaded portion of the external instrument (18).

14. The method of any of claims 11 to 13, wherein the external instrument (18) is a screw.
